# EUROPEAN PATENT APPLICATION

(11) **EP 1 080 622 A1**
(43) Date of publication of application: **07.03.2001**
(21) Application number: 00306144.7
(22) Date of filing: 19.07.2000
(51) Int. Cl.: A01B 63/10, A01B 59/00, A01B 3/42

(54) **Reversible plough**

(30) Priority: 24.08.1999 GB 9919899
(71) Applicant: KVERNELAND KLEPP AS, N-4344 Kvernaland (NO)
(72) Inventor: Stangeland, Kjell-Egil, 4352 Kleppe (NO)
(74) Representative: Orr, William McLean

(57) **Abstract**

A reversible plough (10) which comprises: a headstock (13,31) which is capable of being mounted on a three point hitch (30) of a propelling vehicle (12) and which has two lower hitch points (34) and an upper hitch point (35), said lower hitch point being connectable to a lower part (48) of the headstock and comprising lower links (32) which are upwardly and downwardly adjustable under hydraulic action; a plough frame (14) carrying pairs of reversible plough bodies (15) arranged along its length, said frame being mounted on the headstock so as to be rotatable about a reversing axis (16); and a connecting link (100) for connecting the top hitch (35) of the three point hitch to an upper part (47) of the headstock, in which the connecting link (100) is hydraulically adjustable and is adapted to be connected to a hydraulic operating circuit of the propelling vehicle, so that, in use, said connecting link can automatically reduce its effective length prior to initiation of rotation of the plough frame (14) about the reversing axis (16).

## Description

This invention relates to a reversible plough comprising a plough frame carrying pairs of reversible plough bodies arranged along its length, in which the plough frame is rotatable about a reversing axis provided by a headstock through approximately 180° in order to adjust the plough bodies between left side ploughing and right side ploughing.

The construction and operation of reversible plough bodies will be well known to those of ordinary skill in the art, and need not be described in great detail herein.

The reversing axis about which plough bodies rotate extends generally parallel to the longitudinal axis of the tractor (as seen in plan), but as seen in side elevation the axis extends upwardly and rearwardly away from the headstock at an angle to the horizontal which is dependent upon the amount of upward lifting movement of the lower links of the three point hitch of the tractor to which the headstock is attached (the lower links are usually raised in order to lift the plough bodies out of the ground prior to initiation of rotation of the plough frame).

It is usual for the plough frame to have the foremost pair of plough bodies arranged on a short length of the plough frame at one side of the reversing axis, and for all of the other pairs of plough bodies to be located on a longer part of the plough frame on the opposite side of the reversing axis. However, all of the plough bodies are arranged on the same side of the frame when the plough is in a ploughing position. In addition, rotation of the plough bodies can be either of a first or a second type, namely (a) turning plough bodies over the main frame or (b) turning plough bodies under the main frame respectively.

In one arrangement, all of the plough bodies are located under the main frame when the plough has rotated through approximately 90° (to the transport position), but in the other arrangement, all of the plough bodies are located above the frame, after first rotation through 90°. The rotation of the plough then continues through further 90° of angular movement to the alternative ploughing position.

Evidently, the greater the length of the plough frame (which extends transversely of the ploughing direction), the more will the centre of gravity be displaced laterally from the reversing axis, so that there will be a substantial demand for torque from the tractor in order to rotate the plough bodies through 180° between left side ploughing and right side ploughing.

In addition, in designs of plough which permit adjustment of furrow width, the plough frame can be pivotally adjusted to vary the inclination of the frame relative to the ploughing direction, and for maximum width adjustment, this will further increase the spacing of the centre of gravity from the reversing axis, and with consequent increase in torque demand for the tractor to effect reversal of the plough bodies. More importantly, the greater the overall width of the plough frame (when adjusted to maximum furrow width), the more will the frame extend downwardly of the reversing axis during plough body reversal when the plough frame carries out turning "over the main frame".

Therefore, although the reversing axis is upwardly inclined to the horizontal prior to carrying out plough body reversal, there is in practice a limit to how long the plough frame can be, so that the longer part of the frame and the pairs of plough bodies can rotate downwardly and below the reversing axis without coming into contact with the ground.

Furthermore, if it should be desired to have the option to add a further pair of plough bodies to the end of an existing plough frame, this would further increase the height requirement below the reversing axis and which may not readily be available, and which therefore would prevent this option being implemented.

It might be thought that this problem with the first type of arrangement could easily be solved by adopting the second type of arrangement (in which the longer part of the plough frame rotates upwardly and over the reversing axis). However, in practice, this is not possible, at least in situations in which additional components are mounted on the shorter length part of the plough frame i.e. the part of the frame which carries the foremost pair of plough bodies and which is located on an opposite side of the reversible axis to the longer part of the frame which carries the remainder of the pairs of plough bodies.

A particular example of such an additional component is when a packer is integrated with the reversible plough frame, in which the packer is usually mounted on the plough frame (at or near to the forward end of the frame) via a rigid carrying arm and swivel mounting.

In these known arrangements of integrated reversible plough / packer combination, it will be impossible to effect initial downward rotation of the shorter length of the plough frame plus the packer coupled therewith, since there will be insufficient space available below the reversing axis in order to accommodate these components. Therefore, in practice, it will be advisable to rotate the plough bodies "over the main beam" when an additional component, such as a packer, is mounted on the plough frame.

With regard to the mounting of the headstock on the three point hitch of a tractor, as mentioned above the headstock is carried by the two lower links of the three point hitch which engage a lower part of the headstock, and the headstock is movable up and down by raising and lowering movement of the two lower links. A top link of the three point hitch is connected to an upper part of the headstock, and usually this comprises a simple rod connection pivoted at each end to the upper one of the three point hitch and to the upper end of the headstock respectively.

In known arrangements, the effective length of the rod connection is manually adjustable, so as to permit angular adjustment of the general axis of the plough frame relative to the surface of the ground, whereby all plough bodies can be adjusted to move below the ground surface at substantially the same level.

The present invention is concerned with an improved form of adjustable top link, which can be operated automatically whenever a plough body reversal is required, in order to shorten the effective length of the top link and thereby increase the inclination of the reversing axis to the horizontal so that more space is available below the reversing axis to accommodate downward rotation of the longer part of the plough frame (and the pairs of plough bodies carried thereby) about and below the reversing axis.

According to the invention there is provided a reversible plough which comprises:
a headstock which is capable of being mounted on a three point hitch of a tractor or other propelling vehicle and which has two lower hitch points and an upper hitch point, said lower hitch points being connectable to a lower part of the headstock and comprising lower links which are upwardly and downwardly adjustable under hydraulic action powered by the propelling vehicle in order to raise and lower the headstock;
a plough frame carrying pairs of reversible plough bodies arranged along its length, said frame being mounted on the headstock so as to be rotatable about a reversing axis defined by the headstock through approximately 180° in order to adjust the plough bodies between left side ploughing and right side ploughing; and,
a connecting link for connecting the top hitch of the three point hitch to an upper part of the headstock, said connecting link being adjustable in its effective length in order to adjust the inclination of the general axis of the plough relative to the surface of the ground and thereby control the working depth of the plough bodies;
in which the connecting link is hydraulically adjustable and is adapted to be connected to a hydraulic operating circuit of the propelling vehicle so that, in use, said connecting link can automatically reduce its effective length prior to initiation of rotation of the plough frame about the reversing axis.

Therefore, when plough body reversal is required, the operator of the propelling vehicle initiates the lower links of the three point hitch to be raised and which then lifts the plough bodies out of the ground (and at the same time raises the reversing axis relative to the ground surface). The adjustable link then automatically reduces its effective length, and this causes the inclination of the reversing axis to the horizontal to increase, and therefore more space is made available below the reversing axis and the ground surface (and the height of this space increases in a direction rearwardly of the headstock), such space allowing even a long plough frame to rotate about the reversing axis without coming into contact with the ground.

Therefore, by relatively simple means (the hydraulically adjustable connecting link), the invention provides additional space below the reversing axis which allows the parts of the plough frame which rotate first downwardly and then below the reversing axis to carry out such movement substantially without risk of coming into contact with the ground.

The propelling vehicle usually has a hydraulic pump which is able to generate a supply of pressurised hydraulic fluid, and part of which is routed to an actuator for the lower links, and a further part of which is routed to a turnover cylinder which effects rotation of the plough body about the reversing axis.

The hydraulically adjustable connecting link is connectable to a suitable output of the hydraulic circuit of the propelling vehicle, and will be energised before initiation of energisation of the turnover cylinder.

This can be achieved in a number of different ways. In one arrangement, the connecting link can be energised simultaneously with raising of the lower links. In another arrangement, the connecting link is energised by being connected to the supply of hydraulic fluid intended for operating the turnover cylinder, and which will automatically reduce the effective length of the connecting link before the rotation of the plough begins.

In a still further arrangement, an existing design of sequential valve may be provided which normally ensures that (in the case of a width adjustable plough), an adjusting cylinder is operated so that the plough is adjusted automatically to minimum ploughing width before reversal of the plough. However, with a fixed width plough, this adjusting cylinder is not required, and therefore the connecting hoses (otherwise connected to the adjusting cylinder) are connected to the hydraulically adjustable connecting link, such hoses being energised via the sequential valve. The operating sequence therefore comprises: raising the lower links; tilting the reversing axis and thereby increasing the inclination of the plough; reversing the plough; returning the plough to its original inclination; and lowering the lower links.

A further advantage with the invention is that not all tractors have the same lifting height. In the event that a particular plough should be mounted on a tractor having a maximum lifting height which is too low (to allow rotation of the plough), then the hydraulically adjustable top link of the invention can be fitted, and thereby solve this problem.

Another technical advantage may be obtained in connection with tractors having insufficient lifting capacity. Some tractors have different lifting capacity because of different geometries of the three point hitch, and because of the various hydraulic pressures utilised to operate the three point hitch. It is also a fact that a three point hitch is designed in such a way that the plough or other equipment, which is mounted on the three point hitch, is automatically inclined when it is lifted. Inclination can be 10° or more. It is also a fact that the higher the equipment is to be lifted, the greater is the requirement for hydraulic pressure. It may therefore happen that, for a particular tractor and plough combination, the tractor is unable to lift the plough a sufficient height to allow the plough to be reversed, because of lack of sufficient lifting capacity. The new hydraulically adjustable top link of the invention can solve this problem as well.

A further advantage of the hydraulically adjustable top link of the invention is that it is operated automatically, under control from the operating circuit of the tractor, so as to be fully retracted, or fully extended, at appropriate times in the operating cycle of plough body reversal.

The invention is particularly suitable for use with a reversible plough of the type in which the plough bodies "rotate over the plough frame", and whereby the longer part of the frame (carrying all of the pairs of plough bodies except the foremost pair) first rotates downwardly and then below the axis (through approximately an arc of 90°), before carrying out upward rotation through a further approximately 90° arc in order to take-up the new ploughing position.

By this simple means, the invention can allow longer plough frames to be used (increasing the ploughing capacity), and / or for additional pairs of plough bodies to be mounted on the end of an existing plough frame when required.

The invention may be used to advantage with the cheaper designs of plough having fixed ploughing furrow width, in that the provision of the hydraulically adjustable connecting link is a relatively small additional cost, and which can increase the effectiveness of these cheaper types of ploughs by allowing increased ploughing capacity when required. Indeed, the hydraulically adjustable connecting link may be supplied as an additional component to be used as a modification to be supplied to existing users of fixed ploughing width ploughs.

The invention may be used to advantage also with more expensive reversible ploughs, and including in particular the adjustable furrow width types of ploughs in which (as will be well known to those of ordinary skill in the art), furrow width adjustment takes place by pivotal adjustment of the plough frame (plough beam) relative to the headstock so as to take-up a different angle relative to the ploughing direction.

Increased furrow width is obtained by increasing the angle to the ploughing direction, and which results in increased lateral spacing of the rear outboard end of the plough frame from the reversing axis, and therefore a requirement for additional space to be made available below the reversing axis for reversal of the plough bodies.

The invention is also concerned with a novel headstock arrangement for connecting a plough frame to the three point hitch of a tractor, and which includes a hydraulically adjustable connecting link for connection to the upper hitch point and which is connectable to the hydraulic operating circuit of the tractor which controls the raising and lowering of the lower links of the three point hitch, whereby the connecting link is capable of automatically reducing its effective length after initiation of a plough body reversal sequence between left side ploughing and right side ploughing.

The hydraulically adjustable connecting link therefore is able automatically to reduce its effective length prior to reversal of the plough bodies, and preferably this takes place simultaneously with raising of the lower links. After completion of plough body reversal, the lower links are lowered again and this then causes the connecting link to increase its effective length ready for a new ploughing operation.

Preferably, the connecting link also includes means for carrying out minor adjustment of the effective length, when in the ploughing position, so as to keep substantially constant ploughing depth of all of the plough bodies. Such means may comprise a manually adjustable mechanism e.g. a turntable, although preferably it is formed by an adjusting cylinder.

In a particularly preferred arrangement, the connecting link comprises a double cylinder arrangement, in which a first (adjusting) cylinder is capable of adjusting the effective length of the link for the ploughing position, and a second cylinder is arranged to be energised in order to reduce the effective length of the link prior to initiation of plough body reversal.

The first cylinder therefore can be adjusted to cause any required adjustment of the general axis of the plough frame relative to the ground when in the ploughing position e.g. when first coupling the plough to a tractor, and this adjustment of the effective length of the link is therefore maintained for the ploughing position until any further adjustment might be required. The second cylinder is operated automatically to shorten the effective length of the link each time the lower links are raised, and then returns the connecting link to its originally adjusted length when the lower links of the three point hitch are lowered again, preparatory to a new ploughing operation.

A preferred embodiment of the invention will now be described in detail, by way of example only, with reference to the accompanying drawings in which:
Figures 1a to 1e are diagrammatic illustrations of a general known type of reversible plough to which the invention may be applied, and by way of background to the invention;
Figure 2 is a diagrammatic illustration of a hydraulic control circuit of a known design of headstock for a reversible plough, in which the plough bodies rotate over the main frame during plough body reversal, this also being shown by way of background to the invention;
Figure 2a is a schematic side view showing initial downward movement of the plough bodies on the main part of the plough frame, in the arrangement of Figure 2;
Figure 3 is a diagrammatic illustration of a hydraulic control circuit of a different known design of headstock, in which the plough bodies rotate under the main frame during plough body reversal, and also showing how furrow width adjustment can take place;
Figure 3a is a similar view to Figure 2a, but showing the arrangement of Figure 3 in which the plough bodies rotate under the main frame;
Figure 4 is a diagrammatic illustration showing how an integrated combination of packer and reversible plough can carry out plough body reversal movement;
Figure 5 is a perspective illustration of a known means for coupling a headstock of a reversible plough to a three point hitch of a tractor, this also being described by way of background to the invention;
Figure 6 is a diagrammatic illustration of an embodiment of hydraulically adjustable connecting link according to the invention;
Figure 7a is a schematic side view of an integrated combination of reversible plough and packer, showing how the packer is caused to rotate upwardly first about the reversing axis, during the first stage of plough body reversal;
Figure 7b is a view, similar to Figure 7a, and illustrating how it would be impossible, with such an arrangement, for the packer and the packer arm to rotate downwardly about the reversing axis, in view of the lack of space;
Figure 8 is a side view showing in more detail a typical example of integrated packer and reversible plough, which may embody a hydraulically adjustable connecting link according to the invention, as shown in Figure 6;
Figure 9 is a rear view corresponding to Figure 8; and
Figures 10a and 10b are rear views showing the integrated combination raised to two different types of transport position.

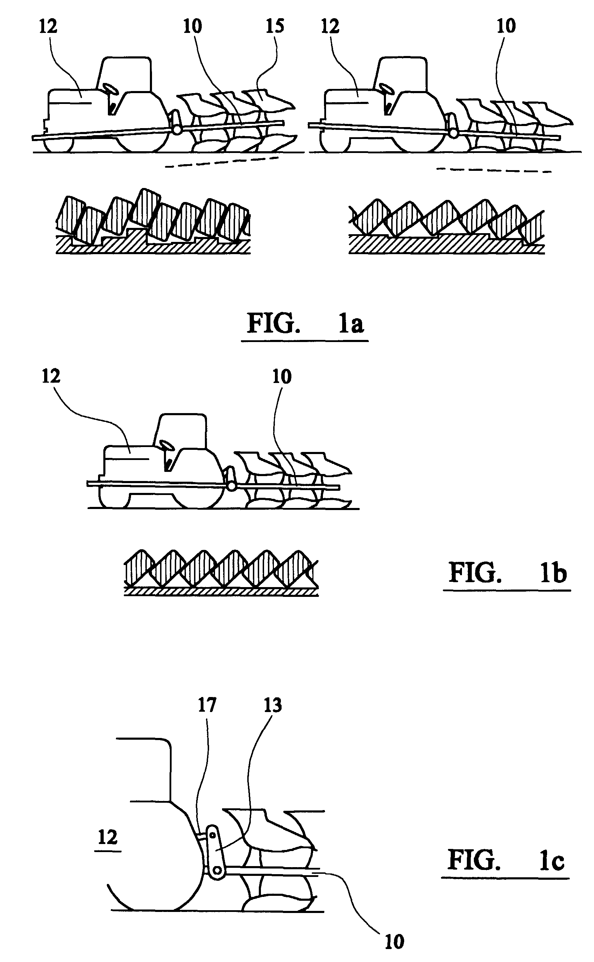

Referring first to Figures 1a to 1e of the drawings, this is a diagrammatic illustration of a known design of reversible plough, and showing different adjustments which can be carried out, and to provide a background to the present invention. A reversible plough is shown generally by reference 10, and which is fully mounted on a three point hitch 11 provided at the rear of an agricultural tractor 12. The reversible plough 10 has a headstock 13 which is fully mounted on the three point hitch 11 of the tractor 12 in known manner, namely by connection of two lower links of the three point hitch 11 to a lower part of the headstock 13, and an upper connecting link interconnecting the top hitch to an upper part of the headstock. The lower links are raised and lowered under the control of a hydraulic operating circuit within the tractor, under driver control, and at the completion of one pass along a field, the lower links are raised in order to lift the plough bodies out of the ground, and then to allow the plough bodies to be reversed (by hydraulic actuation of a turnover cylinder), prior to the tractor turning round and carrying out a reverse pass along the field.

The plough 10 has a plough frame or main beam 14 which carries pairs of reversible ploughs 15 along its length, and the headstock 13 defines a reversing axis 16 about which the plough frame is rotatable, in order to reverse the plough bodies.

In order to adjust the plough bodies between left side ploughing and right side ploughing, it is necessary first to raise the plough bodies out of the ground, by raising of the lower lift arms or links of the three point hitch, and then followed by rotation through approximately 180° of the plough frame, in order to reverse the plough bodies.

In known arrangements, the top link 17 (see Figure 1c) between the top hitch of the three point hitch and the upper part of the headstock 13 is a manually adjustable rod, whose effective length can be increased or reduced, when it is necessary to adjust the general axis of the plough relative to the surface of the ground, with a view to maintaining substantially constant ploughing depth for all of the plough bodies. Figure 1a shows two faulty settings of the plough bodies 15, and a correct setting (Figure 1b), obtained by suitable manual adjustment of the connecting link 17.

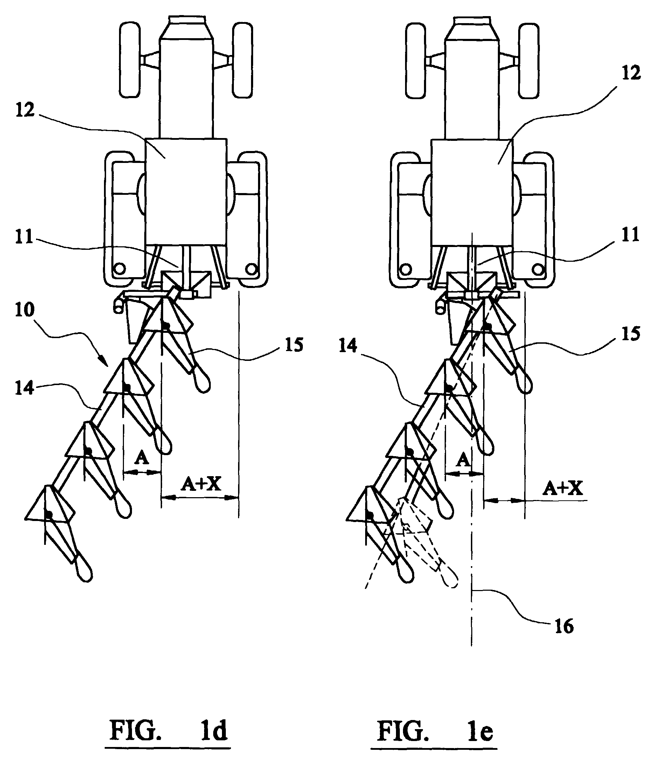

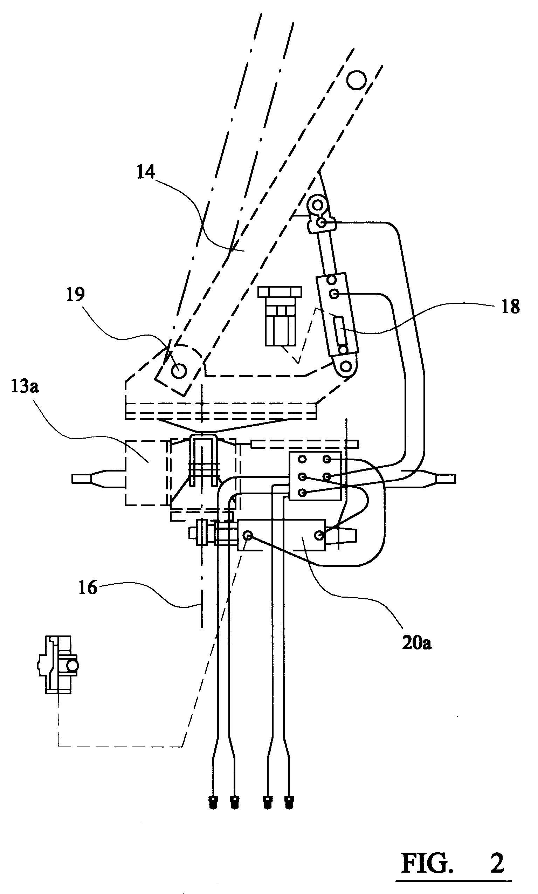

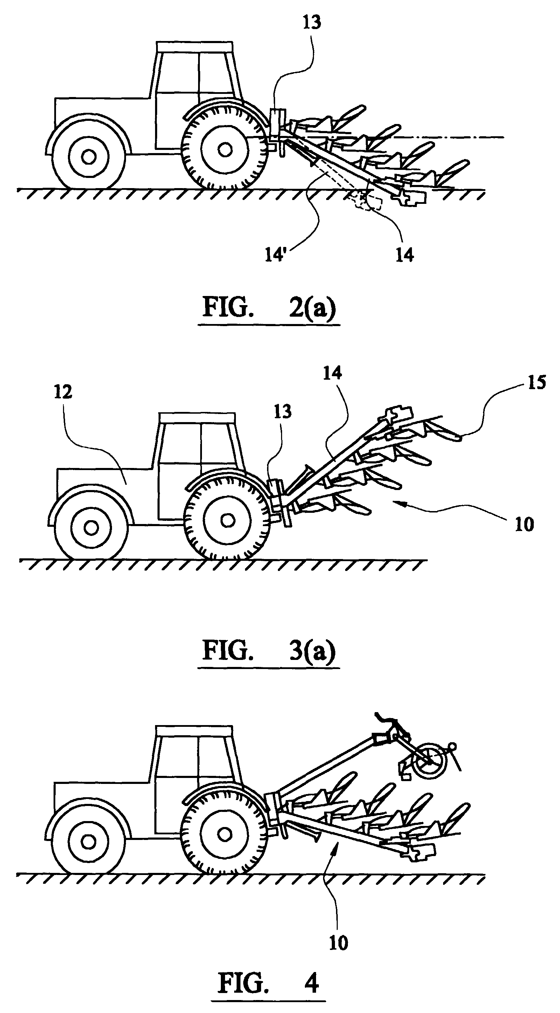

Figures 1d and 1e illustrate a reversible plough 10 of a type which is capable of adjustment in order to vary the ploughing furrow width, and there is illustrated schematically the pivotal adjustment which can take place at the forward end of the plough frame, for the purposes of varying the furrow width. Evidently, to increase the furrow width, the angle of the plough frame 14 to the ploughing direction will be increased, and this will therefore increase the lateral spacing of the rear outboard end of the plough frame from the reversing axis 16, and consequently will displace the centre of gravity of the plough frame laterally further away from the reversing axis. This means therefore that a greater torque demand is required from the engine of the tractor, but more importantly if the plough frame carries out initial downward rotation about the reversing axis 16, there will be a requirement for a substantial space to be available to accommodate such movement, without the plough frame or the plough bodies coming into contact with the ground, after the link arms of a three point hitch have raised the plough bodies out of contact with the ground. Figure 1e shows in phantom outline, the adjustment of the frame 14 suitable for narrower furrow widths. Subsequent description with reference to Figures 2 to 4 will discuss the different ways in which a plough frame can be caused to rotate about the reversing axis, for the purposes of plough body reversal.

Referring first to Figure 2, this shows a headstock in more detail, designated by reference 13a, and also shows main beam 14 rotatably mounted on the headstock 13a so as to be capable of rotating about reversal axis 16 under the action of turnover cylinder 20a. A ploughing width adjustment cylinder 18 can be operated in order to vary the inclination of the beam 14 to the ploughing direction, by pivoting about forward pivot 19. Increase of the angle results in the beam 14 extending transversely of the ploughing direction to a greater extent, thereby to increase the furrow width. This means, however, that the rear outboard end of the beam 14 is spaced laterally by a greater distance from the reversing axis 16, than it is when it is adjusted to a position of narrower furrow widths.

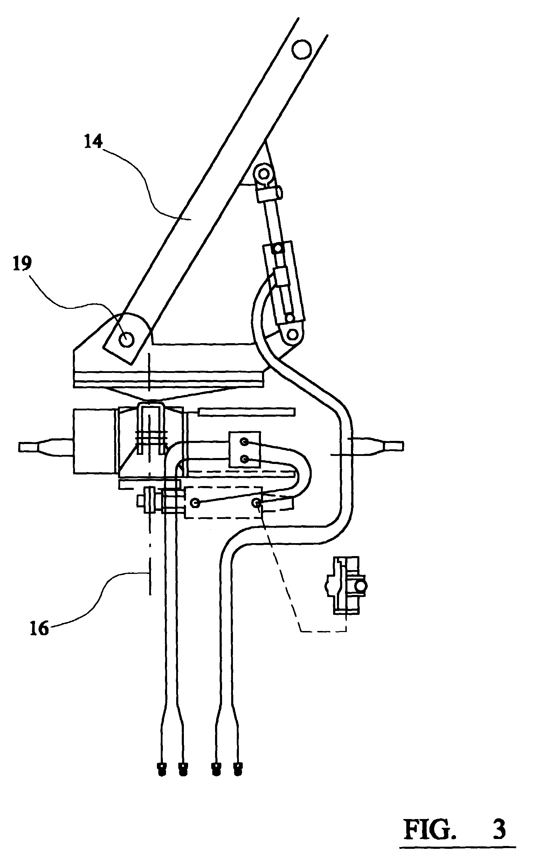

Figure 2a is a schematic side illustration showing how frame 14 rotates about the reversal axis 16 during plough body reversal, and in this case the headstock design is such that the turning bodies rotate "over the main frame". The position of the frame 14 is shown in full lines for a narrow ploughing width and in phantom lines referenced 14', for a wide ploughing width. Figure 2 shows a known headstock design in which the turning bodies rotate over the main frame, whereas Figure 3 will be described with reference to a known arrangement in which the turning bodies rotate "under the main frame". These two types of arrangement of a reversible plough will be well known to those of ordinary skill in the art, and need not be described in great detail herein.

In the arrangement shown in Figure 2a, the main part of the frame first rotates downwardly about the reversing axis 16, and evidently to avoid coming into contact with the ground, it will be important to ensure that there is sufficient space available to accommodate this rotation below the reversal axis 16 and between this axis and the surface of the ground.

Evidently, increasing the lateral extent of the plough frame, upon increase of furrow width adjustment, will present a requirement for a greater amount of space to be made available. Similarly, if it should be desired to increase the length of the plough frame and / or to add extra pairs of plough bodies, this also will impose a requirement for a greater clearance height to be available between the reversal axis and the ground, to accommodate the rotating frame and the plough bodies during the first 90° of rotation from one ploughing position to another.

Figure 3 and 3a generally correspond with Figures 2 and 2a respectively, but illustrate the plough bodies turning under the main frame.

It might be thought that the problem of space requirement for a plough body reversal arrangement of the type shown in Figure 2 can easily be solved merely by adopting the alternative arrangement shown in Figure 3, wherein the main part of the plough frame initially rotates upwardly about the reversing axis through an initial arc of movement of 90°, and which therefore does not have the same absolute requirement for a large amount of space to be made available between the reversing axis and the ground, to accommodate rotation of the main part of the frame as in the arrangement of Figure 2a. However, when additional components are mounted on a plough frame, such as particularly a packer e.g. as in the known Kverneland Packomat design, the mounting of the packer on the plough frame is such that it is essential that the packer is able to carry out upward rotation only, during the first stage of plough body reversal. The packer is a cumbersome piece of equipment, carried on the end of a support arm, and it would be impossible to provide sufficient space to accommodate downward swinging movement of the packer to accompany downward rotation of the plough frame during plough body reversal. Therefore, when an additional component, such as a packer, is provided, it is essential that an arrangement is provided of the type shown in Figure 2, in which the plough bodies turn over the main frame, and therefore there remains this space requirement difficulty, as discussed above.

The present invention therefore has been developed primarily, though not exclusively, to provide a solution for ploughs having a fixed working width, and which are either so long and / or wide that they cannot presently be reversed without risk of parts of the plough coming into contact with the ground during plough body reversal. The invention solves this problem in particular by providing an improved form of adjustable top link (replacing the known manually adjustable top link 17) which can be operated automatically whenever plough body reversal is required, in order to shorten the effective length of the top link and thereby increase the inclination of the reversing axis to the horizontal, so that more space is available below the reversing axis to accommodate downward rotation of the plough frame about and below the reversing axis (after initial raising of the lower link arms of the three point hitch to lift the plough bodies out of contact with the ground).

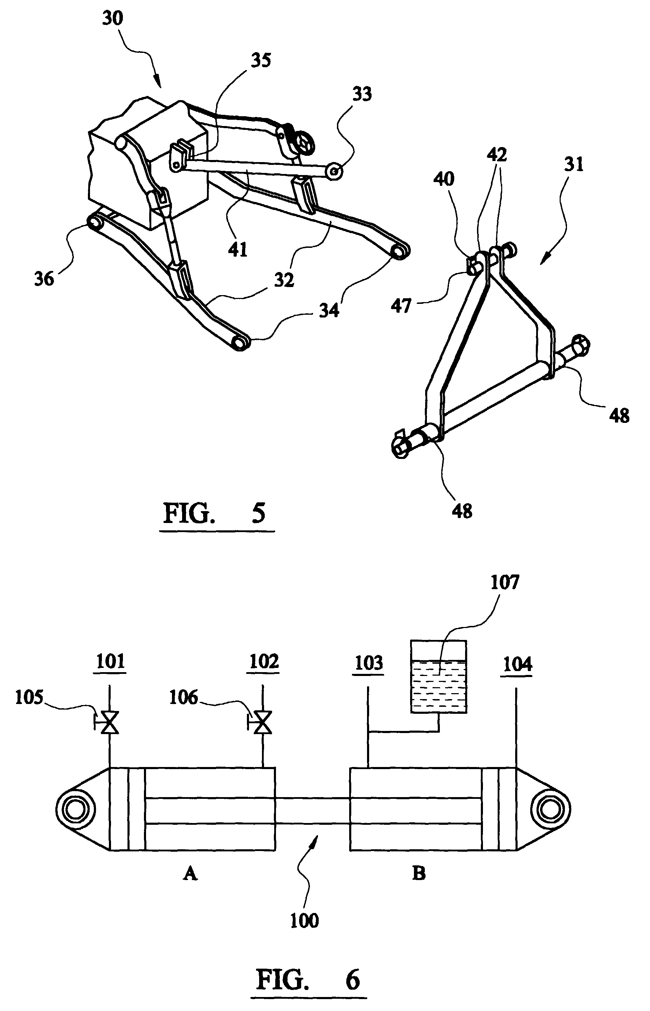

Referring now to Figure 4 of the drawings, this shows schematically an integrated combination of a reversible plough 10 and a packer 20 (not shown in detail), and which may be of the known design available from Kverneland Klepp under the trade mark Packomat. This shows, how it is essential for packer 20 to always rotate initially upwardly about the reversing axis, during plough body reversal. This is with a design which is such that the turning bodies move over the main frame. A novel top link 21 is provided, and construction and operation of which will be described in more detail below with reference to Figures 5 and 6, and which has the function of providing automatic reduction in its effective length, prior to initiation of plough body reversal, and usually after the commencement of lifting of the lower lift arms of the three point hitch.

Therefore, with the arrangement shown in Figure 4, it is possible to provide a solution for ploughs with fixed working width which are so long and/or wide that they could not normally be reversed (because of risk of parts of the plough engaging the ground at least, at the rear end of the plough frame, during plough body reversal). However, by virtue of automatic reduction in effective length of the top link 21, the inclination to the horizontal of the reversing axis (after raising of the lift arms) can be sufficient to raise the rear end of the plough frame and then allow the plough frame to be reversed, and with the packer attached thereto, and without the rear end of the plough and attached components coming into contact with the ground.

Reference will now be made to Figure 5 of the drawings, which shows a known arrangement for coupling a headstock 31 to a three point hitch 30 of a tractor. The three point hitch 30 comprises an upper hitch point 35, two lower hitch points 34, and an upper link 41 connected to the upper hitch point 35, and lower lifting arms 32 carrying the lower hitch points 34 at their outer ends, and pivotally mounted at their inboard ends on lower link point 36.

The headstock 31 comprises an upper connection point 40 at the upper end of mast 42, and to which the upper hitch point 33 of upper link 41 can be connected. Lower hitch attachments 48 can be connected to the lower hitch points 34, in order to complete the assembly.

Raising and lowering movement of the lower links 32 can lift the plough bodies out of the ground, and then return the plough bodies into contact with the ground under the control of the hydraulic operating circuit of the tractor. The upper link 41 is able to follow this raising and lowering movement, and its main function is to serve as a control over the angle of the general axis of the plough relative to the surface of the ground, thereby to control the working depth of the plough bodies, and to seek to maintain substantially uniform ploughing depth of each plough body. In known designs, the upper link 41 is a manually adjustable link, whose effective length is adjusted to cause any necessary adjustment in the inclination to the vertical of the mast 42 of the assembly, thereby to adjust the ploughing depth of the plough bodies when necessary.

A preferred embodiment of the invention will now be described in detail, with reference to Figure 6, which shows a hydraulically adjustable top link, which can operated automatically whenever plough body reversal is required, in order to shorten the effective length of the top link and thereby increase the inclination of the reversing axis to the horizontal, so that more space is available below the reversing axis to accommodate downward rotation of the longer part of the plough frame (and the pairs of plough bodies carried thereby) about and below the reversing axis.

The embodiment of hydraulically adjustable top link according to the invention is designated generally by reference 100, and which is intended to interconnect the upper link point 35 of the three point hitch to the upper hitch attachment 47 of the mast 42 of the headstock assembly 31 shown in figure 5. The hydraulically adjustable top link 100 comprises a double cylinder arrangement, comprising a first adjusting cylinder A which is capable of adjusting the effective length of the link when in the ploughing position, and a second cylinder B which is arranged to be energised in order to reduce the effective length of the link prior to initiation of plough body reversal. (As an alternative to the adjusting cylinder A, a manually operated length adjustment mechanism may be provided).

First cylinder A is adjusted, to provide an overall adjusted length of the link 100 when in the ploughing position, and necessary adjustment is achieved by controlling flow to or from cylinder A via ports 101 and 102, and controlled by valves 105 and 106. After a required adjusted length in the ploughing position has been set, the ports 101 and 102 are blocked by closure of the valves 105 and 106. This adjustment will then be maintained for as long as the same tractor and the same plough (and also the same adjusted ploughing depth) are to be utilised.

By contrast, the second cylinder B is connected to the hydraulic operating circuit of the tractor, which controls the operation of the lifting arms, and also of the usual turnover cylinder (not shown) which rotates the plough frame about the reversing axis, and the connection is such that automatic operation of the second cylinder B takes place, to effect a reduction in effective length of the link 100 prior to operation of the plough body reversal mechanism. During the normal ploughing operation, the second cylinder B will be in the fully extended position, which is achieved by allowing hydraulic fluid to enter port 104 and leave exit port 103. After the plough bodies have been lifted out of the ground by raising of the two lower link arms of the three point hitch, the reversing axis will be raised relative to the ground surface, but in addition the reversing axis will be tilted upwards by automatic reduction in the effective length of the top link 100, by reason of hydraulic fluid entering port 103 and leaving via port 104 until the second cylinder B is fully retracted.

A preferred additional feature is shown in Figure 6, comprising an optional hydraulic accumulator 107 which is connected to the line leading to port 103. This can operate to damp the forces generated in the top link 100, thereby to reduce the maximum forces applied to the main components of the plough, and thereby increase the effective working life of the main components.

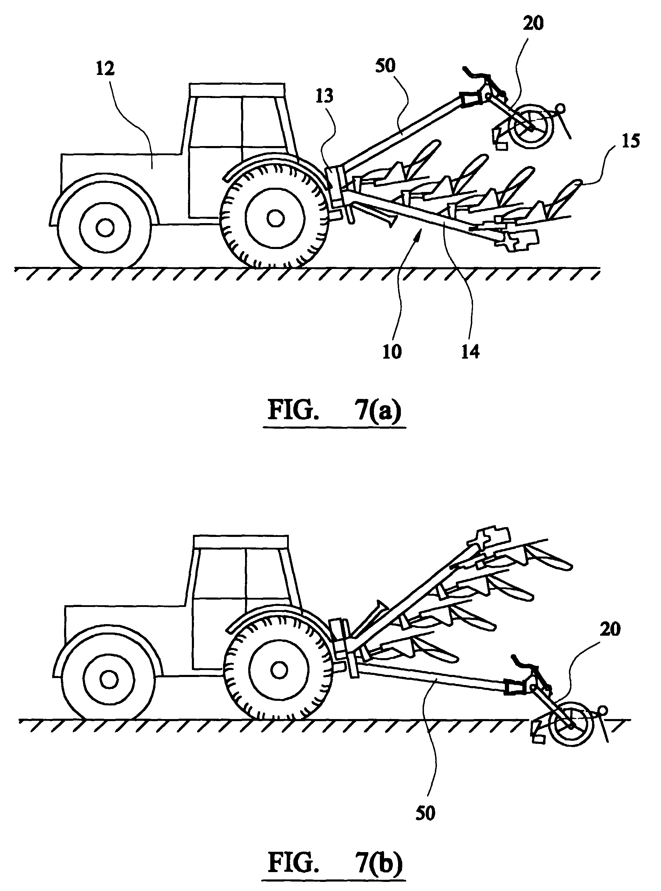

Referring to Figure 7a, this shows an integrated combination of packer 20 and reversible plough 10, and in particular shows how it is essential for the assembly to rotate about the reversing axis in such a way that the packer 20 and the packer arm 50 must rotate upwardly, during the first stage of plough body reversal.

Figure 7b is a similar view, and showing how it would be impossible for the assembly to rotate in such a way that the packer 20 and the packer arm 50 rotate downwardly about the reversing axis, since there would be insufficient space available, and the packer, or parts thereof, would be liable to come into contact with the ground.

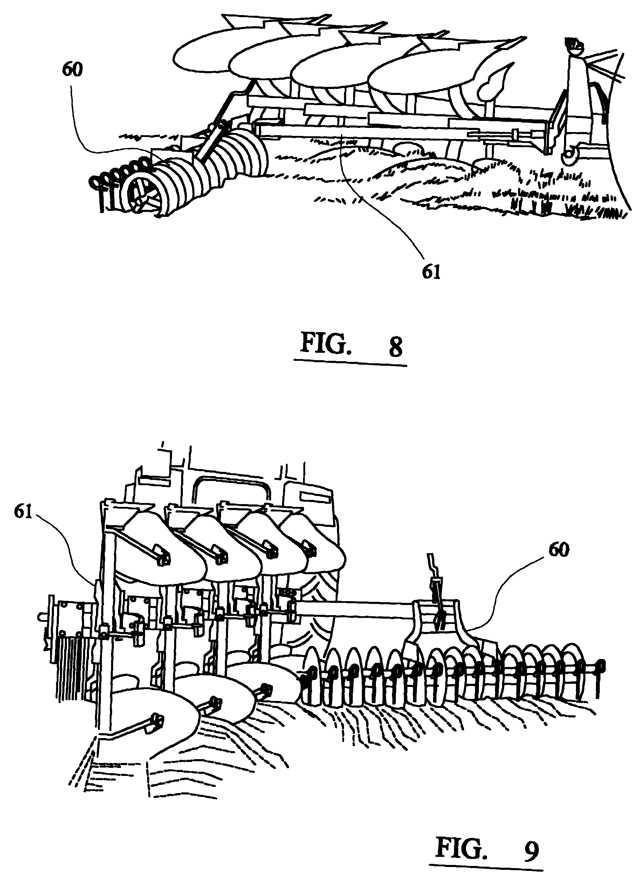

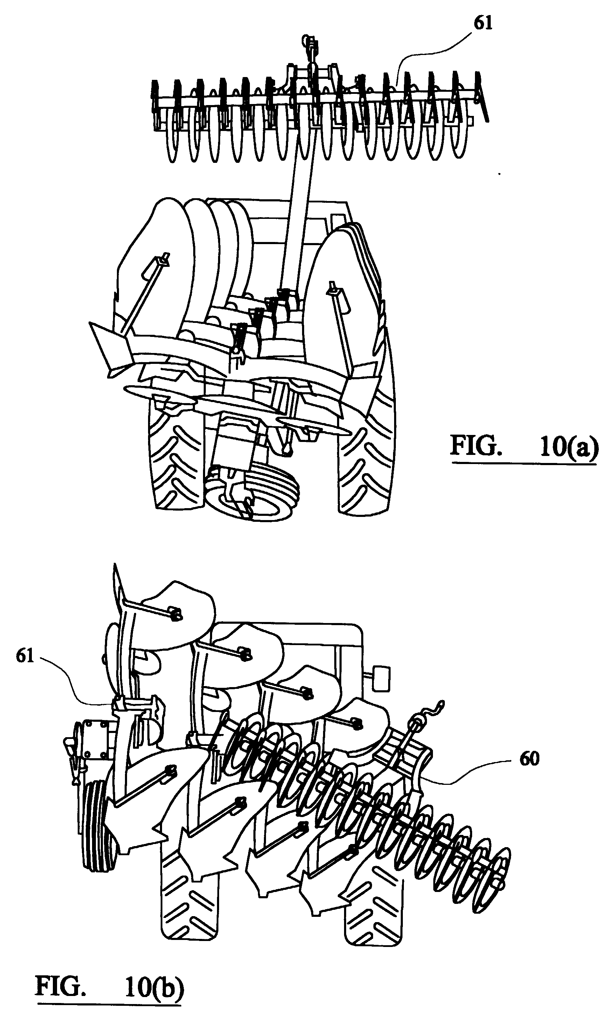

Figures 8, 9, 10a and 10b are further views, in more detail, of a typical example of integrated combination of packer 60 and reversible plough 61, which may employ a hydraulically adjustable connecting link according to the invention, as exemplified in Figure 6 herein.

## Claims

1. A reversible plough (10) which comprises:
a headstock (13, 31) which is capable of being mounted on a three point hitch (30) of a tractor or other propelling vehicle (12) and which has two lower hitch points (34) and an upper hitch point (35), said lower hitch point being connectable to a lower part (48) of the headstock and comprising lower links (32) which are upwardly and downwardly adjustable under hydraulic action in order to raise and lower the headstock;
a plough frame (14) carrying pairs of reversible plough bodies (15) arranged along its length, said frame being mounted on the headstock so as to be rotatable about a reversing axis (16) defined by the headstock through approximately 180° in order to adjust the plough bodies (15) between left side ploughing and right side ploughing; and
a connecting link (100) for connecting the top hitch (35) of the three point hitch to an upper part (47) of the headstock, said connecting link being adjustable in its effective length in order to adjust the inclination of the general axis of the plough relative to the surface of the ground and thereby control the working depth of the plough bodies;
in which the connecting link (100) is hydraulically adjustable and is adapted to be connected to a hydraulic operating circuit of the propelling vehicle, so that, in use, said connecting link can automatically reduce its effective length prior to initiation of rotation of the plough frame (14) about the reversing axis (16).

2. A plough according to claim 1, in which the plough is of the type in which the plough bodies are rotatable over the plough frame, whereby the longer part of the frame first rotates downwardly and then below the axis through approximately an arc of 90°, before carrying out upward rotation through a further arc of approximately 90° in order to take up the new ploughing position.

3. A plough according to claim 1 or 2, in which the plough has fixed ploughing furrow widths.

4. A plough according to claim 1 or 2, in which the plough is an adjustable furrow width type of plough.

5. A novel headstock arrangement for connecting a plough frame (14) to the three point hitch of a tractor, and which includes a hydraulically adjustable connecting link (100) for connection to the upper hitch point (35) and which is connectable to the hydraulic operating circuit of the tractor which controls the raising and lowering of the lower links (32) of the three point hitch, whereby the connecting link is capable of automatically reducing its effective length after initiation of a plough body reversal sequence between left side ploughing and right side ploughing.

6. A headstock arrangement according to claim 5, in which the automatic adjustment of the effective length of the connecting link is arranged to take place simultaneously with raising of the lower links (32) of the three point hitch.

7. A headstock arrangement according to claim 5 or 6, in which the connecting link (100) includes means (A) for carrying out minor adjustment of the effective length, when in the ploughing position, so as to keep substantially constant ploughing depth of all of the plough bodies.

8. A plough according to any one of claims 1 to 4, or a headstock arrangement according to any one of claims 5 to 7, in which the connecting link (100) comprises a double cylinder arrangement (A, B), in which a first cylinder (A) is capable of adjusting the effective length of the link for the ploughing position, and a second cylinder (B) is arranged to be energised in order to reduce the effective length of the link prior to initiation of plough body reversal.

9. A hydraulically adjustable connecting link (100) for connection to the upper hitch point (35) of a three point hitch of a tractor, and which is connectable to a hydraulic operatable circuit of the tractor whereby the connecting link is capable of automatically reducing its effective length after initiation of a plough body reversal sequence between left side ploughing and right side ploughing.

10. A hydraulically adjustable connecting link according to claim 9, which is able automatically to reduce its effective length simultaneously with raising of the lower links (32) of the three point hitch.

11. A hydraulically adjustable connecting link according to claim 9 or 10, which includes means (A) for carrying out minor adjustment of the effective length of the link (100), when in the ploughing position, so as to keep substantially constant ploughing depth of all of the plough bodies.

12. A hydraulically adjustable connecting link according to claim 11, and which comprises a double cylinder arrangement, in which a first cylinder (A) is capable of adjusting the effective length of the link (100) for the ploughing position, and a second cylinder (B) is arranged to be energised in order to reduce the effective length of the link prior to initiation of plough body reversal.

13. A hydraulically adjustable connecting link according to claim 12, in which the second cylinder (B) is operable automatically to shorten the effective length of the link each time the lower links (32) are raised, and then is able to return the connecting link to its originally adjusted length when the lower links (32) of the three point hitch are lowered again, preparatory to a new ploughing operation.

14. A hydraulically adjustable connecting link according to any one of claims 9 to 13, and including a hydraulic accumulator (107) which is effective to dampen the forces applied by the connecting link to the plough.

15. A hydraulically adjustable connecting link according to claim 9, in which the link is connectable to a hydraulic operating circuit of a tractor which is capable of energising (a) the raising and lowering of the lower links of the three point hitch and / or (b) the operation of a turnover cylinder of the plough.
